# EUROPÄISCHE PATENTSCHRIFT

(11) **EP 2 556 582 B1**
(45) Veröffentlichungstag und Bekanntmachung des Hinweises auf die Patenterteilung: **06.01.2016**
(21) Anmeldenummer: 11716855.9
(22) Anmeldetag: 07.04.2011
(51) Int. Cl.: H02K 15/03, H02K 1/27

(54) **ROTOR**
ROTOR
ROTOR

(30) Priorität: 09.04.2010 DE 102010014597
(43) Veröffentlichungstag der Anmeldung: 13.02.2013
(73) Patentinhaber: Continental Automotive GmbH, 30165 Hannover (DE)
(72) Erfinder: BRANDAU, Rüdiger, 36211 Alheim (DE); SIEBALD, Kurt, 36199 Rotenburg (DE)
(86) Internationale Anmeldenummer: PCT/EP2011/055389
(87) Internationale Veröffentlichungsnummer: WO 2011/124629

(56) Entgegenhaltungen:
- EP-A1- 1 788 690
- EP-A2- 1 209 799
- DE-A1-102004 060 379
- US-A- 4 910 861
- US-A- 5 040 286

## Beschreibung

Die Erfindung betrifft einen Rotor für einen Elektromotor, wobei der Rotor einen Grundkörper aufweist, an dem mindestens eine Auflagefläche ausgebildet ist, auf die mindestens ein permanentmagnetisches Element aufgebracht ist.

Rotoren für Elektromotoren der eingangs genannten Art sind bekannt und sie werden vielfältig verwendet. Dabei gibt es unterschiedliche Methoden zur Befestigung der permanentmagnetischen Elemente an dem Grundkörper des Rotors. Es ist zum Beispiel aus der DE 10 2005 052 870 A1 bekannt, die permanentmagnetischen Elemente vollständig mit einem Kunststoff zu umspritzen und sie so an dem Grundkörper zu fixieren. Dabei ist es jedoch sehr schwierig die permanentmagnetischen Elemente während des Spritzgießens genau in ihrer Lage zu halten. Da beim Spritzgießen das Spritzgut mit sehr hohem Druck verspritzt wird, können die permanentmagnetischen Elemente während des Spritzgießens in ihrer Lage am Grundkörper verschoben werden. Die permanentmagnetischen Elemente können auch auf dem Grundkörper aufgeklebt werden. Dies ist jedoch ein sehr schwieriger und damit teuerer Prozess, der zudem oft zu ungenügenden Ergebnissen führt.

Aus der EP 1 788 690 B1 ist ein Permanentmagnetrotor für einen Synchronmotor bekannt. Der Synchronmotor weist einen Stator auf, der einen zylindrischen zentralen Kern umfasst. Der zylindrische Kern ist von einer Vielzahl von Permanentmagneten mit äußeren Bogenflächen und inneren Bogenflächen und Seitenkanten umgeben. Der zylindrische Kern umfasst einen becherartigen Körper, der aus einem Plastikmaterial besteht. Eine käfigartige Struktur ist um den becherartigen Körper herum angeordnet. Die käfigartige Struktur wird durch Einspritzen eines Plastikmaterials erhalten.

Die EP 1 209 799 A2 offenbart eine axiale Lagerung eines Rotors einer elektrischen Maschine. Der Rotor für eine elektrische Maschine umfasst ein Rotorpaket mit mehreren Magneten, das drehfest mit einer Welle verbunden ist, wobei an mindestens einer Stirnseite des Rotorpakets eine das Rotorpaket abdeckende Abdeckscheibe angeordnet ist. Zur Reduzierung des Montageaufwandes ist ein Axiallager zur axialen Lagerung des Rotors in die Abdeckscheibe integriert.

Es ist daher die Aufgabe der vorliegenden Erfindung einen Rotor für einen Elektromotor anzugeben, bei dem das mindestens ein permanentmagnetisches Element kostengünstig und mit genau vorbestimmter Lage an dem Grundkörper befestigt ist.

Diese Aufgabe wird durch die Merkmale des unabhängigen Patentanspruches gelöst.

Dadurch, dass der Grundkörper von einer Fügehülse teilweise umgeben ist, die Kammerwände aufweist, wobei die Kammerwände mit den Auflageflächen mindestens eine Kammer bilden, in der das mindestens eine permanentmagnetische Element angeordnet ist, wird das mindestens eine permanentmagnetische Element sehr exakt in seiner Lage auf den Auflageflächen gehalten. Damit ergibt sich ein sehr gut ausgewuchteter Rotor, der auch bei einem schnellen Lauf keine Unwucht aufweist und damit das Lager des Rotors nur wenig belastet. Dies träg erheblich zur Langlebigkeit des Elektromotors bei. Da die Fügehülse das permanentmagnetische Element in radialer Richtung am Grundkörper in seiner Lage fixiert, wird eine Verschiebung des permanentmagnetischen Elementes während des Spitzgießens und auch nach der Herstellung des Rotors in radialer Richtung verhindert. Da ein Verriegelungselement an den Grundkörper angespritzt ist, das die Kammer verschließt und damit das permanentmagnetische Element in axialer Richtung an dem Rotor in seiner Lage fixiert, ist auf kostengünstige Art ein hochwertiger Rotor für einen Elektromotor herstellbar. An dem Grundkörper ist mindestens ein Kanal ausgebildet, der sich in axialer Richtung über den gesamten Grundkörper erstreckt und der zwei Auflageflächen voneinander trennt, wobei eine Kammerwand der Fügehülse in den Kanal eingreift. Durch den Eingriff der Kammerwand in den Kanal ist die Fügehülse vorteilhaft an dem Grundkörper gegen ein Verdrehen gesichert.

Wenn der Kanal einen Hinterschnitt aufweist und an der Kammerwand ein Ankerelement ausgebildet ist, wobei das Ankerelement in den Hinterschnitt formschlüssig eingreift, ist eine sehr beständige und lagestabile Sicherung der Fügehülse am Grundkörper gewährleistet.

Dadurch, dass auf dem Grundkörper eine Vielzahl von Kanälen ausgebildet ist, die eine Vielzahl von Auflageflächen voneinander trennen, und an der Fügehülse eine entsprechende Vielzahl von Kammerwänden ausgebildet ist, von denen jede zweite ein Ankerelement aufweist, das formschlüssig in den Hinterschnitt eines zugeordneten Kanals eingreift, wird zum einen eine hochstabile Fixierung der Fügehülse und damit der permanentmagnetischen Elemente auf dem Grundkörper erreicht und zum anderen verbleiben nicht vollständig ausgefüllte Kanäle in dem Grundköper, durch die beim Anspritzen des Verriegelungselementes ein Teil der Spritzgussmasse hindurch treten kann, womit sich das Verrieglungselement auf beiden Stirnseiten des Grundkörpers ausbilden kann, auch wenn nur eine Stirnseite mit der Spritzgussmasse angespritzt wird. Beim Spritzgießen wird die flüssige Spritzgießmasse von der angespritzten Stirnseite des Grundkörpers durch die nicht vollständig ausgefüllten Kanäle im Grundkörper auf die der angespritzten Seite des Grundkörpers gegenüberliegende Seite gedrückt. Dabei werden auch die vor den Spritzgießen nicht vollständig ausgefüllten Kanäle vollständig mit Spritzgießmasse verfüllt.

Bei einer Ausgestaltung besteht der Grundkörper aus einem magnetisch leitenden Material. Hierfür eignen sich zum Beispiel ferrometallische Materialien aber auch Werkstoffe aus in Kunststoff gebundenen ferrometallischen Partikeln können eingesetzt werden. Der Grundkörper aus magnetisch leitendem Material erhöht den Wirkungsgrad des Elektromotors und damit auch seinen Leistungsfähigkeit. Dabei ist es besonders vorteilhaft, wenn der Grundkörper aus einem Stapel von Stanzblechteilen besteht.

Im Folgenden wird ein Verfahren zur Herstellung eines Rotors für einen Elektromotor beschrieben, wobei der Rotor einen Grundkörper aufweist, an dem mindestens einen Auflagefläche ausgebildet ist. Auf die Auflagefläche wird mindestens ein permanentmagnetisches Element aufgebracht und ausschließlich mit einem Haltewerkzeug gehalten, wonach über den Grundkörper und das permanentmagnetische Element eine Fügehülse mit Kammerwänden in axialer Richtung aufgeschoben wird. Damit wird das permanentmagnetische Element nun von der Fügehülse gehalten und das Haltewerkzeug kann entfernt werden. Es ist sichergestellt, dass das permanentmagnetische Element von der Fügehülse und der Auflagefläche ausreichend in radialer Richtung am Grundkörper fixiert wird. Dann wird die Fügehülse vollständig über das permanentmagnetische Element geschoben und ein Verriegelungselement wird im Spritzgießverfahren an den Grundkörper angespitzt. Das Verriegelungselement bewirkt eine Fixierung des permanentmagnetischen Elementes in axialer Richtung am Grundkörper. Das hier offenbarte Verfahren ist sehr einfach und kostengünstig, da auf aufwendige Prozesse wie kleben oder schweißen völlig verzichtet werden kann. Die Fügehülse kann in einem separaten Spritzgießprozess, vor der Montage des Rotors, sehr kostengünstig und mit hoher Genauigkeit hergestellt werden. Das hier vorgestellte Verfahren zur Herstellung eines Rotors eignet sich besonders gut zur vollautomatischen Herstellung des Rotors. Dies spart Herstellungskosten und minimiert die Fehlerhäufigkeit.

Der Rotor für einen Elektromotor, bei dem der Rotor einen Grundkörper aufweist, an dem mindestens eine Auflagefläche ausgebildet ist, kann darüber hinaus nach dem folgenden Verfahren hergestellt werden. Hier wird über den Grundkörper eine Fügehülse mit Kammerwänden in axialer Richtung aufgeschoben, so dass die Auflagefläche und die Kammerwände mindestens eine Kammer bilden. In diese Kammer wird dann ein permanentmagnetisches Element in axialer Richtung eingeschoben, so dass das permanentmagnetische Element von der Fügehülse und der Auflagefläche ausreichend in radialer Richtung am Grundkörper fixiert wird. Dann wird ein Verriegelungselement im Spritzgießverfahren an den Grundkörper angespitzt, das eine Fixierung des permanentmagnetischen Elementes in axialer Richtung am Grundkörper bewirkt. Bei diesem Verfahren kann sogar auf die Haltewerkzeuge für die permanentmagnetischen Elemente verzichtet werden. Auch dieses Verfahren zur Herstellung eines Rotors eignet sich besonders gut zur vollautomatischen Herstellung des Rotors.

Die Erfindung wird nachfolgend anhand der Figuren näher erläutert. Dabei zeigt:
- Fig. 1: einen Elektromotor,
- Fig. 2: den Aufbau des Rotors,
- Fig. 3: den Grundkörper,
- Fig. 4: Kanäle und Hinterschnitte an dem Grundkörper,
- Fig. 5: die Fügehülse,
- Fig. 6: den Rotor mit dem metallischen Grundkörper,
- Fig. 7: einen Segmentschnitt durch den erfindungsgemäßen Rotor,
- Fig. 8: das durch den Spritzgussvorgang entstandene Verriegelungselement einzeln.

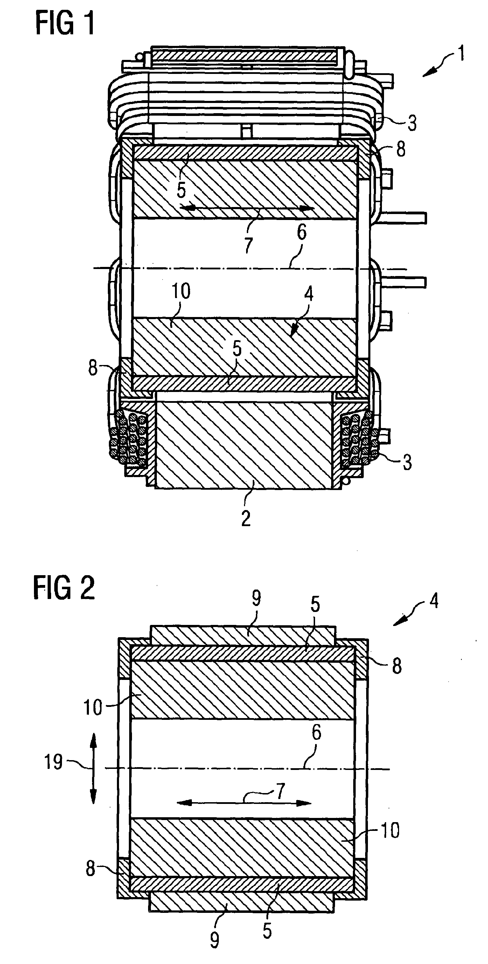

Fig. 1 zeigt einen Elektromotor 1 mit einem Stator 2 und einem Rotor 4. Hierbei kann es sich zum Beispiel um einen sogenannten Reluktanzmotor handeln. An dem Stator 2 sind Spulen 3 angebracht, die mit einem kommutierten elektrischen Strom bestromt werden können, womit ein magnetisches Wechselfeld erzeugt werden kann. Der Rotor 4 ist drehbar auf einer Achse 6 gelagert und er weist einen Grundkörper 10 und permanentmagnetische Elemente 5 auf. Diese permanentmagnetischen Elemente 5 werden auf dem Grundkörper 10 durch eine Fügehülse 9 und ein Verriegelungselement 8 gehalten. Durch den Pfeil ist die axiale Richtung 7 angedeutet, in der zum Beispiel die Fügehülse 9 auf den Grundkörper 10 aufgeschoben werden kann. Die permanentmagnetischen Elemente 5 sind hier quaderförmig ausgebildet, was besonders preiswert ist. Sie können aber auch schalenförmig ausgebildet sein.

Der Aufbau des Rotors 4 wird in Fig. 2 näher dargestellt. Zu erkennen ist eine Vielzahl permanentmagnetischer Elemente 5, die auf der zylindrischen Außenfläche des Grundkörpers 10 angeordnet sind. Hier sind die permanentmagnetischen Elemente 5 quaderförmig ausgebildet. Die auf dem Grundkörper 10 aufgebrachten permanentmagnetischen Elemente 5 werden von der Fügehülse 9 in radialer Richtung 19 fixiert und von dem Verriegelungselement 8 in axialer Richtung fixiert. Weiterhin ist die Drehachse 6 zu erkennen, um die sich der Rotor 4 dreht, wenn er im Elektromotor 1 verbaut ist.

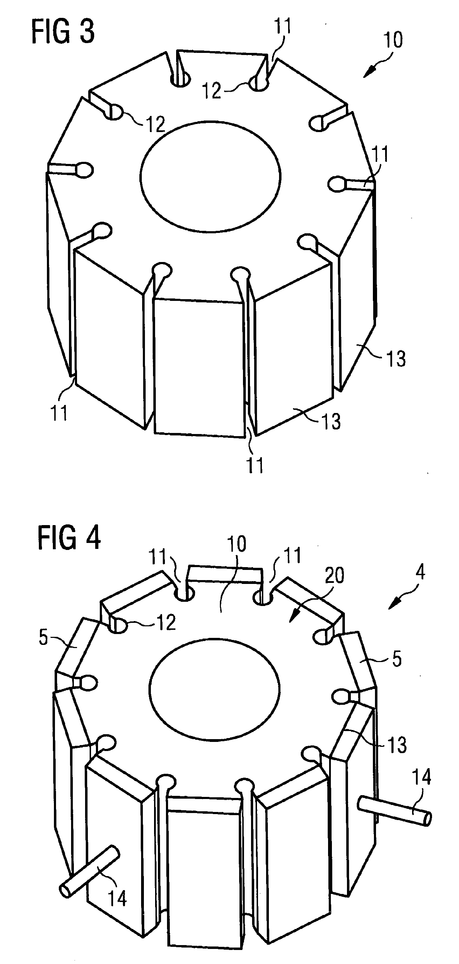

Figur 3 zeigt den Grundkörper 10, der aus ferrometallischem Material gebildet sein kann. Besonders vorteilhaft ist es, wenn der Grundkörper 10 aus einem Stanzblechpaket gebildet ist. Darüber hinaus ist es denkbar, den Grundkörper aus einem Kunststoff zu bilden, dem ferromagnetische Partikel beigemischt sind. Am Grundkörper 10 sind Kanäle 11 ausgebildet, die sich in axialer Richtung 7 über den gesamten Grundkörper 10 erstrecken. Ein Kanal 11 trennt jeweils zwei Auflageflächen 13 voneinander. Die Kanäle 11 weisen Hinterschnitte 12 auf. Der hier gezeigte Grundkörper 10 muss zur Vervollständigung des Rotors 4 mit permanentmagnetischen Elementen 5 bestückt werden, die auf den Auflageflächen 13 fixiert werden. Die permanentmagnetischen Elemente 5 können dazu als schon magnetisierte permanentmagnetische Elemente 5 oder als unmagnetisierte permanentmagnetische Elemente 5 im Fertigungsprozess auf den Grundkörper 10 aufgelegt werden. Bei noch nicht magnetisierten permanentmagnetischen Elementen 5 erfolgt die Magnetisierung der permanentmagnetischen Elemente 5 nach der Fertigstellung des Rotors 4.

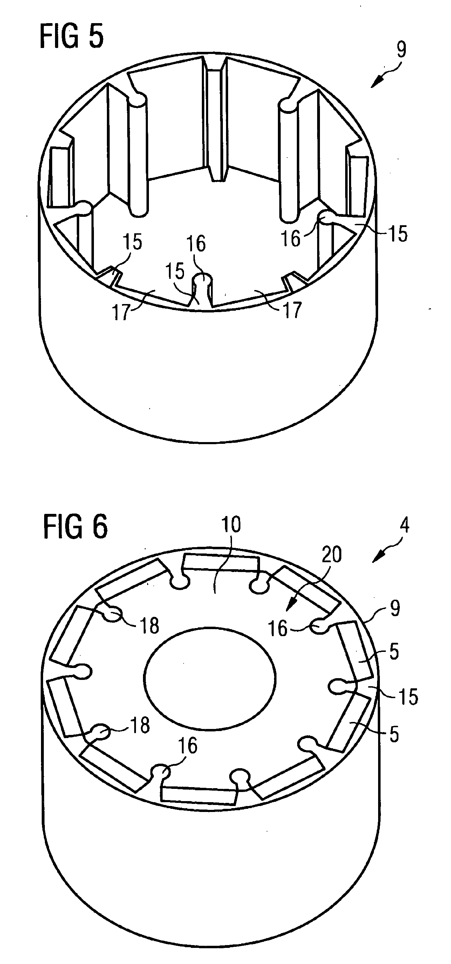

Figur 4 zeigt den Grundkörper 10 mit auf den Auflageflächen 13 aufgelegten permanentmagnetischen Elementen 5. Die permanentmagnetischen Elemente 5 werden in diesem Beispiel von Haltewerkzeugen 14 in ihrer Lage auf den Auflageflächen 13 gehalten, solange bis die Fügehülse 9 zumindest teilweise über den Grundkörper 10 und die permanentmagnetischen Elemente 5 geführt ist. In Figur 4 sind die Kanäle 11 und die Hinterschnitte 12 an dem Grundkörper 10 zu erkennen. Darüber hinaus ist hier eine Stirnseite 20 des Grundkörpers 10 dargestellt. Die in Figur 5 dargestellte Fügehülse 9 kann nun über die Konfiguration in Figur 4 in axialer Richtung 7 aufgeschoben werden. Hierbei greifen die Ankerelemente 16 an der Fügehülse 9 formschlüssig in die Hinterschnitte 12 an den Grundkörper 10.

Figur 5 zeigt die Fügehülse 9. Die Fügehülse 9 kann zum Beispiel im Spritzgießverfahren vor der Montage des Rotors als separates Bauteil hergestellt werden. In Figur 5 ist zu erkennen, dass lediglich an jeder zweiten Kammerwand 5 der Fügehülse 9 ein Ankerelement 16 ausgebildet ist. Da am Grundkörper 10 dieselbe Anzahl von Kanälen 11 mit Hinterschnitten 12 ausgebildet ist, wie in der Fügehülse 9 Kammerwände 15 zur Verfügung stehen, jedoch nur an jeder zweiten Kammerwand 15 der Fügehülse 9 ein Ankerelement 16 ausgebildet ist, bleibt jeder zweite Kanal 18 im Grundkörper 10 teilweise unausgefüllt, wenn die Fügehülse 9 auf den Grundkörper 10 aufgeschoben wurde. Weiterhin zeigt Figur 5 die durch die Kammerwände 15 gebildeten Kammern 17, in die beim Aufschieben der Fügehülse 9 auf den Grundkörper 10 die permanentmagnetischen Elemente 5 wandern. Dies ist in Figur 6 dargestellt.

Figur 6 zeigt den Rotor 4 mit dem metallischen Grundkörper 10 und den permanentmagnetischen Elementen 5, die auf den Auflageflächen 13 aufliegen, wobei über die permanentmagnetischen Elemente 5 und den Grundkörper 10 die Fügehülse 9 aufgeschoben ist. Zu erkennen ist, dass nur jeder zweite Hinterschnitt 12 des Grundkörpers 10 mit einem Ankerelement 16 der Fügehülse 9 ausgefüllt ist. Die unausgefüllten Kanäle 18 und deren Hinterschnitte 12 erweisen sich als besonders vorteilhaft beim Anspritzen des Verriegelungselementes 8. Dies wird später noch dargestellt. Es sei angemerkt, das neben jeder zweiten auch jede n-te Kammerwand mit einem Ankerelement versehen sein kann, womit dann auch nur jeder n-te Kanal vollständig bis zum Hinterschnitt ausgefüllt ist, wenn die Fügehülse 9 auf den Grundkörper 10 aufgeschoben ist (n sei eine natürliche Zahl, n = 2, 3, 4, ...). Es sei zudem bemerkt, dass die Reihenfolge des Aufbringens der permanentmagnetischen Elemente 5 auf die Anlageflächen 13 auch variieren kann. Dazu ist es möglich, dem Grundkörper 10 aus Figur 3 die Fügehülse 9 aufzuschieben und erst danach die permanentmagnetischen Elemente 5 in die so entstandenen Kammern 17 einzuschieben. Bei dieser Vorgehensweise ist es sogar möglich, die Haltewerkzeuge 14 einzusparen. Darüber hinaus ist jede Kombination der beiden beschriebenen Vorgehensweisen denkbar. Nachdem der Grundkörper 10 mit den permanentmagnetischen Elementen 5 bestückt wurde, und die Fügehülse 9 in ihre Position über dem Grundkörper 10 und dem permanentmagnetischen Elementen 5 gebracht ist, erfolgt die Anspritzung des Verriegelungselementes 8. Es ist möglich, das Gebilde nach Figur 6 in ein Spritzgießwerkzeug einzulegen und nur von einer Stirnseite 20 des Grundkörpers 10 eine Spritzgussmasse gegen den Grundkörper 10 zu spritzen, die dann durch die freien Bereiche der Kanäle 11 und der Hinterschnitte 12 auf die gegenüberliegende Stirnseite 20 des Grundkörpers 10 fließt, wobei sich das Verriegelungselement 8 an beiden Stirnseiten 20 des Grundkörpers 10 ausbildet, was die Bewegung der permanentmagnetischen Elemente 5 in axialer Richtung 7 vollständig verhindert, wenn das Verriegelungselement ausgehärtet ist. Dadurch, dass sich beim Durchfließen der Spritzgussmasse durch die freien Bereiche der Kanäle 11 Stege 21 zwischen den beiden an den Stirnseiten 20 anliegenden Bereichen des Verriegelungselementes 8 ausbilden, ergibt sich eine besonders haltbare und langlebige Befestigung der permanentmagnetischen Elemente 5 auf dem Grundkörper 10.

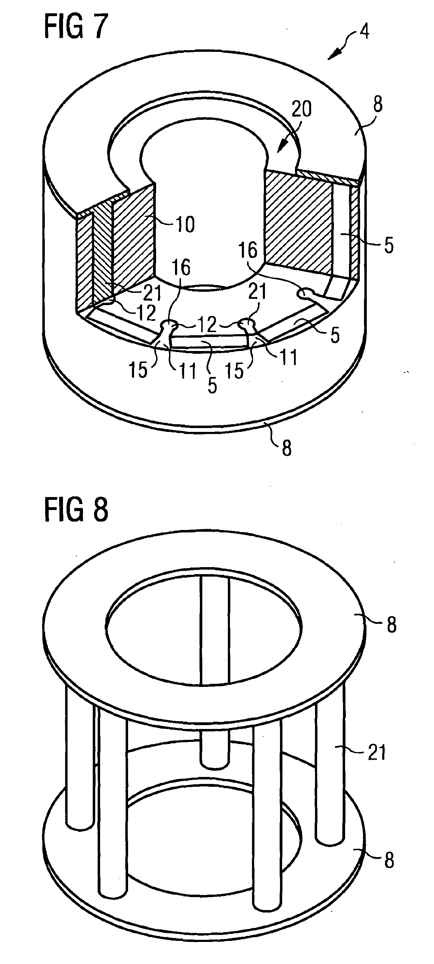

Einen Segmentschnitt durch den so hergestellten erfindungsgemäßen Rotor 4 zeigt Figur 7. Zu erkennen ist wiederum der Grundkörper 10 mit einer Stirnseite 20. An dem Grundkörper 10 sind die Kanäle 11 mit den Hinterschnitten 12 zu erkennen. Jeder Kanal 11 ist zumindest teilweise von einer Kammerwand 15 ausgefüllt. Jeder zweite (oder jeder n-te) Kanal 11 ist jedoch nur bis zur Hälfte ausgefüllt, wobei der Hinterschnitt 12 frei bleibt. In die vollständig ausgefüllten Kanäle 12 greifen die Kammerwände 15 mit den Ankerelementen 16 formschlüssig ein. Durch die unvollständig ausgefüllten Kanäle ist insbesondere im Bereich der Hinterschnitte 12 die Spritzgussmasse des Verriegelungselementes 8 durchgedrungen, wobei sich sowohl an der angespritzten als auch an der gegenüberliegenden Stirnseite 20 des Grundkörpers 10 das Verriegelungselement ausbilden konnte. Diese obere und untere Ausbildung des Verriegelungselementes 8 ist durch die Stege 21 verbunden. Diese Stege füllen nun ihrerseits die vormals freien Kanäle 18 vollständig und formschlüssig aus. Der hier gezeigte Rotor ist enorm preisgünstig und vollautomatisch herstellbar und dabei extrem langzeitstabil, und auf Grund der hochpräzisen Anordnung der permanentmagnetischen Elemente ist der hier dargestellte Rotor 4 extrem gut ausgewuchtet. Diese Unwuchtfreiheit des Rotors führt zu einer besonderen Langlebigkeit des mit diesem erfindungsgemäßen Rotor bestückten Elektromotors 1.

In Figur 8 ist das durch den Spritzgussvorgang entstandene Verriegelungselement einzeln dargestellt. Der Grundkörper 10 und die permanentmagnetischen Elemente sind hier nicht dargestellt. Das Verriegelungselement 8 zeigt einen oberen und einen unteren Ring, die die axiale Verschiebung der permanentmagnetischen Elemente 5 wirkungsvoll verhindern. Darüber hinaus sind die Stege 21 zu erkennen, die zwischen den beiden Ringen während des Anspritzens des Verriegelungselementes 8 gebildet wurden. Das Verriegelungselement 8 wurde vorzugsweise nur von einer Stirnseite 20 an den Grundkörper 10 angespritzt, es ist aber auch denkbar das Verriegelungselement 8 von beiden Stirnseiten 20 an den Grundkörper 10 anzuspritzen.

## Patentansprüche

1. Rotor (4) für einen Elektromotor (1), wobei der Rotor (4) einen Grundkörper (10) aufweist, an dem mindestens einen Auflagefläche (13) ausgebildet ist, auf die mindestens ein permanentmagnetisches Element (5) aufgebracht ist, wobei der Grundkörper (10) von einer Fügehülse (9) teilweise umgeben ist, die Kammerwände (15) aufweist, wobei die Kammerwände (15) mit den Auflageflächen (13) mindestens eine Kammer (17) bilden, in der das mindestens eine permanentmagnetische Element (5) angeordnet ist, wobei die Fügehülse (9) das permanentmagnetische Element (5) in radialer Richtung (19) am Grundkörper (10) in seiner Lage fixiert und ein Verriegelungselement (8) an den Grundkörper (10) angespritzt ist, das die Kammer (17) verschließt und damit das permanentmagnetische Element (5) in axialer Richtung (7) am Grundkörper (10) in seiner Lage fixiert, **dadurch gekennzeichnet, dass** an dem Grundkörper (10) mindestens ein Kanal (11) ausgebildet ist, der sich in axialer Richtung (7) über den gesamten Grundkörper (10) erstreckt und der zwei Auflageflächen (13) voneinander trennt, wobei eine Kammerwand (15) der Fügehülse (9) in den Kanal (11) eingreift.

2. Rotor (4) nach Anspruch 1, **dadurch gekennzeichnet, dass** der Kanal (11) einen Hinterschnitt (12) aufweist und an der Kammerwand (15) ein Ankerelement (16) ausgebildet ist, wobei das Ankerelement (16) in den Hinterschnitt (12) formschlüssig eingreift.

3. Rotor (4) nach Anspruch 2, **dadurch gekennzeichnet, dass** auf dem Grundkörper (10) eine Vielzahl von Kanälen (11) ausgebildet ist, die eine Vielzahl von Auflageflächen (13) voneinander trennen, und an der Fügehülse (9) eine entsprechende Vielzahl von Kammerwänden (15) ausgebildet ist, von denen jede zweite ein Ankerelement (16) aufweist, das formschlüssig in den Hinterschnitt (12) eines zugeordneten Kanals (11) eingreift.

4. Rotor (4) nach einem der Ansprüche 1-3, **dadurch gekennzeichnet, dass** der Grundkörper (10) aus einem magnetisch leitenden Material besteht.

5. Rotor (4) nach Anspruch 4, **dadurch gekennzeichnet, dass** der Grundkörper (10) aus einem Stapel von Stanzblechteilen besteht.

## Claims

1. Rotor (4) for an electric motor (1), the rotor (4) having a basic body (10) on which is formed at least one bearing surface (13), to which at least one permanent-magnetic element (5) is attached, wherein the basic body (10) is surrounded partially by a joining sleeve (9) which has chamber walls (15), the chamber walls (15) forming with the bearing surfaces (13) at least one chamber (17) in which the at least one permanent-magnetic element (5) is arranged, the joining sleeve (9) fixing the permanent-magnetic element (5) in position on the basic body (10) in the radial direction (19), and a locking element (8) being injection-molded onto the basic body (10) and closing the chamber (17) and consequently fixing the permanent-magnetic element (5) in position on the basic body (10) in the axial direction (7), **characterized in that** the basic body (10) has formed on it at least one channel (11) which extends in the axial direction (7) over the entire basic body (10) and which separates two bearing surfaces (13) from one another, a chamber wall (15) of the joining sleeve (9) engaging into the channel (11).

2. Rotor (4) according to Claim 1, **characterized in that** the channel (11) has an undercut (12) and an anchor element (16) is formed on the chamber wall (15), the anchor element (16) engaging positively into the undercut (12).

3. Rotor (4) according to Claim 2, **characterized in that** the basic body (10) has formed on it a multiplicity of channels (11) which separate a multiplicity of bearing surfaces (13) from one another,
and the joining sleeve (9) has formed on it a corresponding multiplicity of chamber walls (15), every second one of which has an anchor element (16) which engages positively into the undercut (12) of an assigned channel (11).

4. Rotor (4) according to one of Claims 1-3, **characterized in that** the basic body (10) is composed of a magnetically conductive material.

5. Rotor (4) according to Claim 4, **characterized in that** the basic body (10) is composed of a bundle of punched sheet-metal parts.

## Revendications

1. Rotor (4) pour un moteur (1) électrique, dans lequel le rotor (4) comporte un corps (10) de base, sur lequel est formée au moins une surface (13) d'appui sur laquelle est monté au moins un élément (5) à aimant permanent, le corps (10) de base étant entouré partiellement d'un manchon (9) d'assemblage, qui a des parois (15) de chambre, formant avec la surface (13) d'appui au moins une chambre (17), dans laquelle est disposé au moins un élément (5) à aimant permanent, le manchon (9) d'assemblage fixant l'élément (5) à aimant permanent en direction (19) radiale au corps (10) de base dans sa position et un élément (8) de verrouillage s'étend à partir du corps (10) de base, ferme la chambre (17) et ainsi fixe en sa position l'élément (5) à aimant permanent en direction (7) axiale au corps (10) de base, **caractérisé en ce que** au moins un canal (11) est formé sur le corps (10) de base en s'étendant en direction (7) axiale sur la totalité du corps (10) de base et séparant mutuellement deux surfaces (13) d'appui, une paroi (15) de chambre du manchon (9) d'assemblage pénétrant dans le canal (11).

2. Rotor (4) suivant la revendication 1, **caractérisé en ce que** le canal (11) comporte une contre-dépouille (12) et un élément (16) d'ancrage est formé sur la paroi (15) de chambre, l'élément (16) d'ancrage pénétrant à complémentarité de forme dans la contre-dépouille (12).

3. Rotor (4) suivant la revendication 2, **caractérisé en ce qu'**une pluralité de canaux (11) sont formés sur le corps (11) de base en séparant mutuellement une pluralité de surfaces (13) d'appui, et une pluralité correspondante de parois (15) de chambre étant formée sur le manchon (9) d'assemblage, une paroi (15) de chambre sur deux comportant un élément (16) d'ancrage qui pénètre à complémentarité de forme dans la contre-dépouille (12) d'un canal (11) associé.

4. Rotor (4) suivant l'une des revendications 1 à 3, **caractérisé en ce que** le corps (10) de base est constitué d'un matériau magnétique conducteur.

5. Rotor (4) suivant la revendication 4, **caractérisé en ce que** le corps (10) de base est constitué d'une pile de pièces de métal en tôle emboutie.
